# DEMANDE DE BREVET EUROPEEN

(11) **EP 4 140 823 A1**
(43) Date de publication de la demande: **01.03.2023**
(21) Numéro de dépôt: 22191628.1
(22) Date de dépôt: 23.08.2022
(51) Int. Cl.: B60R 13/02

(54) **ELÉMENT DE GARNISSAGE COMPRENANT UNE COUCHE DE REVÊTEMENT FIXÉE DANS UNE GORGE D'UN SUPPORT**

(30) Priorité: 25.08.2021 FR 2108903
(71) Demandeur: Faurecia Intérieur Industrie, 92000 Nanterre (FR)
(72) Inventeur: BONAVENTURE, Franck, 95270 BELLOY EN FRANCE (FR); MOREL, Jean-Pierre, 95650 BOISSY L'AILLERIE (FR)
(74) Mandataire: Lavoix

(57) **Abrégé**

L'élément de garnissage (1) comprend :
- un support (2) comprenant une gorge (12) délimitée par une première paroi (16) et une deuxième paroi (18),
- une première couche de revêtement (4) comprenant au moins un bord (28) reçu dans la gorge (12).

L'élément de garnissage comprend en outre un dispositif de maintien (30) du bord (28) de la première couche de revêtement (4) dans la gorge (12), ledit dispositif de maintien (30) comprenant un élément d'appui (44) s'étendant au moins en partie dans la gorge (12) et appliquant une partie de la face externe (26) du bord (28) de la première couche de revêtement (4) contre la deuxième paroi (18) de la gorge (12), la première couche de revêtement (4) recouvrant la gorge (12) de la première paroi (16) à la deuxième paroi (18).

## Description

La présente invention concerne un élément de garnissage de véhicule, du type comprenant :
- un support comprenant au moins une gorge s'étendant en creux à partir d'une surface externe du support, ladite gorge étant délimitée par une première paroi et une deuxième paroi espacées l'une de l'autre,
- au moins une première couche de revêtement comprenant une face interne s'étendant sur une première partie dudit support et une face externe, opposée à la face interne, ladite première couche de revêtement comprenant au moins un bord définissant une partie de la périphérie de la première couche de revêtement, ledit bord étant reçu dans la gorge du support, la face interne du bord de la première couche de revêtement s'étendant en regard de la première paroi de la gorge et la face externe du bord de la première couche de revêtement s'étendant en regard de la deuxième paroi de la gorge.

L'invention s'applique par exemple à un élément de garnissage formant une planche de bord, un panneau de porte, une console centrale ou autre, pour garnir l'habitacle d'un véhicule.

Un tel élément de garnissage comprend généralement un support, conférant sa forme et sa rigidité à l'élément de garnissage, revêtu par au moins une couche de revêtement, conférant son aspect et son toucher à l'élément de garnissage.

Dans certains cas, au moins deux couches de revêtement, présentant par exemple des aspects différents, peuvent être prévues pour recouvrir des parties différentes du support. Dans ce cas, afin de conférer un aspect agréable à la transition entre les deux couches de revêtement, il est par exemple prévu d'introduire les bords adjacents des deux couches de revêtement dans une gorge prévue dans le support, la transition apparaissant alors sous la forme de parties incurvées des couches de revêtement à l'endroit où elles sont introduites dans la gorge. Plus le rayon de courbure des parties incurvées est petit et plus la transition entre les deux couches de revêtement apparaitra comme une ligne entre les deux couches de revêtement. A l'inverse, plus le rayon de courbure est grand et plus la transition apparaîtra comme un creux s'étendant entre les deux couches de revêtement, la profondeur de ce creux étant d'autant plus important que le rayon de courbure est grand, ce qui peut nuire à l'aspect de l'élément de garnissage au niveau de la transition.

Lorsque les deux couches de revêtement sont de même nature et présentent une épaisseur similaire, il est possible d'obtenir des rayons de courbure suffisamment petits pour que la transition présente un aspect satisfaisant.

Cependant, lorsque seule une partie du support est revêtue par une couche de revêtement, l'autre partie étant laissée nue ou lorsque l'une des couches de revêtement présente une épaisseur très inférieure à l'épaisseur de l'autre couche de revêtement, le rayon de courbure de la couche de revêtement la plus épaisse est agrandi pour que la couche de revêtement occupe sensiblement toute la gorge et l'aspect de l'élément de garnissage est dégradé au niveau de la gorge. En outre, un écart apparaît entre la face externe de la couche de revêtement et un bord de la gorge, ce qui réduit encore la qualité perçue au niveau de la transition.

Pour pallier cet inconvénient, il pourrait être envisagé de réduire la largeur de la gorge pour ajuster celle-ci à l'épaisseur de la couche de revêtement. Mais cela complique la réalisation de l'élément de garnissage. En outre, cela n'est pas toujours possible du fait des contraintes de l'outil de réalisation du support, notamment lorsque celui-ci est réalisé par compression, la gorge devant présenter une certaine largeur minimale qui est généralement supérieure à celle de la couche de revêtement.

L'un des buts de l'invention est de pallier ces inconvénients en proposant un élément de garnissage présentant un aspect satisfaisant même lorsque seule une partie du support est revêtue par une couche de revêtement ou lorsque les couches de revêtement sont de nature différente.

A cet effet, l'invention concerne un élément de garnissage du type précité, comprenant un dispositif de maintien du bord de la première couche de revêtement dans la gorge du support, ledit dispositif de maintien comprenant au moins un élément d'appui s'étendant au moins en partie dans la gorge et appliquant une partie de la face externe du bord de la première couche de revêtement contre la deuxième paroi de la gorge, la première couche de revêtement recouvrant la gorge de la première paroi à la deuxième paroi.

L'élément de maintien permet de combler la gorge avec la première couche de revêtement, même lorsque celle-ci présente une épaisseur bien inférieure à la largeur disponible dans la gorge, mesurée entre la première et la deuxième parois ou entre la première paroi et la face externe d'une deuxième couche de revêtement dont un bord est également reçu dans la gorge. Ainsi, le rayon de courbure de la partie incurvée de la première couche de revêtement, s'étendant à l'endroit où la première couche de revêtement plonge dans la gorge, peut être réduit et la profondeur du creux s'étendant entre la face externe de la première couche de revêtement et la deuxième paroi de la gorge ou la face externe de l'autre couche de revêtement peut également être réduite. Ainsi, l'aspect de l'élément de garnissage est satisfaisant, notamment au niveau de la périphérie de la première couche de revêtement, au droit de la gorge.

L'élément de garnissage selon l'invention peut comprendre une ou plusieurs des caractéristiques suivantes, prises isolément ou selon toute combinaison techniquement envisageable :
- la première partie du support est adjacente à la première paroi de la gorge, le support comprenant une deuxième partie adjacente à la deuxième paroi de la gorge.
- l'élément de garnissage comprend une deuxième couche de revêtement, de nature différente de celle de la première couche de revêtement, une face interne de ladite deuxième couche de revêtement s'étendant sur la deuxième partie du support, la deuxième couche de revêtement comprenant un bord définissant une partie de la périphérie de la deuxième couche de revêtement, ledit bord étant reçu dans la gorge, la face interne du bord de la deuxième couche de revêtement s'étendant sur de la deuxième paroi de la gorge, l'élément d'appui du dispositif de maintien appliquant une partie de la face externe du bord de la première couche de revêtement contre une face externe du bord de la deuxième couche de revêtement, opposée à la face interne de la deuxième couche de revêtement.
- la somme des épaisseurs des bords de la première couche de revêtement et de de la deuxième couche de revêtement est inférieure à la largeur de la gorge.
- l'élément d'appui comprend une branche d'ancrage s'étendant sensiblement parallèlement aux première et deuxième parois de la gorge et étant agencée pour maintenir le bord de la première couche de revêtement dans ladite gorge, l'élément de maintien comprenant une branche d'appui s'étendant en saillie d'une extrémité de ladite branche d'ancrage selon une direction allant de la première paroi à la deuxième paroi de la gorge, la première couche de revêtement étant pliée autour de ladite branche d'appui.
- le bord de la première couche de revêtement est replié autour de la branche d'ancrage de l'élément de maintien.
- le dispositif de maintien comprend en outre un profilé de maintien du bord de la première couche de revêtement dans la gorge, ledit profilé de maintien définissant un logement délimité par deux parois latérales appliquées respectivement contre la première paroi et la deuxième paroi de la gorge, le bord de la première couche de revêtement étant maintenu dans ledit logement.
- la branche d'ancrage est reçue dans ledit logement et bloque le bord de la première couche de revêtement dans ledit logement.
- la paroi latérale du profilé de maintien appliquée contre la première paroi de la gorge est formée par la branche d'ancrage de l'élément de maintien, le profilé de maintien et l'élément de maintien étant venus de matière.
- au moins une paroi latérale du profilé de maintien comprend au moins une nervure s'étendant en saillie de ladite paroi latérale à l'extérieur du logement entre ladite paroi latérale et la paroi correspondante de la gorge, ladite nervure ancrant le profilé de maintien dans la gorge.

D'autres aspects et avantages de l'invention apparaîtront à la lecture de la description qui suit, donnée à titre d'exemple et faite en référence aux dessins annexés, dans lesquels :
[Fig 1] - la Fig. 1 est une représentation schématique en coupe d'une partie d'un élément de garnissage selon un premier mode de réalisation de l'invention,
[Fig 2] - la Fig. 2 est une représentation schématique en coupe d'une partie d'un élément de garnissage selon un deuxième mode de réalisation de l'invention,
[Fig 3] - la Fig. 3 est une représentation schématique en coupe d'une partie d'un élément de garnissage selon un troisième mode de réalisation de l'invention,
[Fig 4] - la Fig. 4 est une représentation schématique en coupe du dispositif de maintien de la Fig. 3 dans un état déplié, et
[Fig 5] - la Fig. 5 est une représentation schématique en coupe d'une partie d'un élément de garnissage selon un quatrième mode de réalisation de l'invention.

En référence aux figures, on décrit un élément de garnissage 1 de véhicule comprenant un support 2 et au moins une couche de revêtement 4 s'étendant sur une première partie 6 du support 2. Un tel élément de garnissage 1 est destiné à être monté sur une partie de véhicule et à s'étendre dans l'habitacle du véhicule.

Dans la description, les termes « interne » et « intérieur » désignent des éléments tournés vers la partie du véhicule sur laquelle l'élément de garnissage 1 est destiné à être monté et les termes « externe » et « extérieur » désignent des éléments tournés vers l'habitacle du véhicule.

Le support 2 est formé par un corps présentant la forme d'au moins une partie de l'élément de garnissage et par exemple réalisé en un matériau sensiblement rigide. Ainsi, le support 2 confère sa forme et sa rigidité à au moins une partie de l'élément de garnissage. Le support 2 peut présenter toute forme souhaitée, telle qu'une forme tridimensionnelle, en fonction de la nature de l'élément de garnissage.

Selon un mode de réalisation, le support 2 est réalisé en un matériau composite comprenant des fibres naturelles dans une matrice en polypropylène, également connu sous la dénomination de NFPP pour « Natural Fibre PolyPropylene ». Les fibres naturelles sont par exemple choisies parmi le lin, le chanvre, le kénaf et/ou le bois. Le support 2 est par exemple formé par thermocompression dans un outil de pressage présentant la forme souhaitée du support 2, qui correspond à la forme d'au moins une partie de l'élément de garnissage 1. En variante, le support 2 peut être réalisé en d'autres matériaux, par exemple du type thermoplastique injecté, tel que du polypropylène injecté, éventuellement chargé avec des fibres minérales ou naturelles.

Le support 2 comprend une surface interne 8 et une surface externe 10, opposée à la surface interne 8. Le support 2 comprend au moins une gorge 12 s'étendant en creux à partir de la surface externe 10. Par « s'étendant en creux à partir de la surface externe 10 », on entend que la gorge 12 forme un renfoncement par rapport au reste de la surface externe 10, comme représenté sur les figures. La gorge 12 s'étend à la périphérie de la première partie 6 du support 2 et forme ainsi un bord d'au moins une portion de cette première partie 6. De l'autre côté de la gorge 12 par rapport à la première partie 6, le support 2 comprend une deuxième partie 14. Ainsi, la gorge 12 forme également un bord d'au moins une portion de la deuxième partie 14.

Du côté de la surface externe 10, la gorge 12 est délimitée par une première paroi 16, une deuxième paroi 18 et une paroi de fond 20.

La première paroi 16 s'étend à partir de la surface externe 10 de la première partie 6 vers la paroi de fond 20 selon une direction allant vers la surface interne 12 et forme un angle non nul avec la surface externe 10 de la première partie 6. L'angle formé entre la première paroi 16 et la surface externe 10 de la première partie 6 est par exemple compris entre 30° et 150°.

La deuxième paroi 18 s'étend à partir de la surface externe 10 de la deuxième partie 14 vers la paroi de fond 20 selon une direction allant vers la surface interne 12 et forme un angle non nul avec la surface externe de la deuxième partie 14. L'angle formé entre la deuxième paroi 18 et la surface externe 10 de la deuxième partie 14 est par exemple compris entre 30° et 150°. La deuxième paroi 18 est par exemple sensiblement parallèle à la première paroi 16. En variante, la première paroi 16 et la deuxième paroi 18 convergent l'une vers l'autre en se rapprochant de la paroi de fond 20. Cette variante est plus particulièrement appliquée lorsque le support 2 est réalisé en NFPP en raison des contraintes matérielles liées à la thermocompression lors de la réalisation du support 2.

La paroi de fond 20 s'étend entre la première paroi 16 et la deuxième paroi 18, à leur extrémité écartée de la surface externe 10 des première et deuxième parties 6, 14. Ainsi, la gorge 12 présente une section présentant sensiblement la forme d'un U, les branches du U étant formées par les première et deuxième parois 16, 18 et la base du U étant formée par la paroi de fond 20. La gorge 12 comprend une ouverture 22 à l'opposé de la paroi de fond 20, l'ouverture 22 s'étendant donc entre la surface externe 10 de la première partie 6 et la surface externe 10 de la deuxième partie 14.

La largeur de la gorge 12 est définie comme étant la distance entre la première paroi 16 et la deuxième paroi 18. La largeur de la gorge 12 est par exemple sensiblement comprise entre 4,4 mm et 10 mm. On notera que, du fait des contraintes imposées par l'outil de mise en forme du support 2, tel qu'un outil de pressage comme décrit précédemment, la largeur de la gorge 12 ne peut pas être inférieure à 4,4 mm.

La première couche de revêtement 4 s'étend sur la première partie 6 du support 2. Plus particulièrement, la première couche de revêtement 4 comprend une face interne 24, s'étendant en regard de la surface externe 10 de la première partie 6 du support 2, et une face externe 26 opposée à la face interne 24 et formant une partie visible de l'élément de garnissage 1 depuis l'habitacle du véhicule dans lequel l'élément de garnissage 1 est installé. La face interne 24 est par exemple appliquée sur la surface externe 10 de la première partie 6. L'épaisseur de la première couche de revêtement est définie comme étant la distance entre la face interne 24 et la face externe 26. L'épaisseur de la première couche de revêtement 4 est par exemple sensiblement comprise entre 1 mm et 5 mm.

La première couche de revêtement 4 comprend un bord 28 formant au moins une partie de la périphérie de la première couche de revêtement 4 au voisinage de la deuxième partie 14. Lorsque la première couche de revêtement 4 est fixée sur la première partie 6 du support 2, le bord 28 s'étend dans la gorge 12 et est maintenue dans celle-ci par un dispositif de maintien 30, comme cela sera décrit plus en détail ultérieurement. Ainsi, le bord 28 est défini comme étant la partie de la première couche de revêtement 4 qui s'étend à partir de la partie extrême de la première partie 6 du support 2 jusque dans la gorge 12.

Selon le mode de réalisation représenté sur les figures, la première couche de revêtement 4 comprend une couche d'aspect 32 et une couche d'envers 34. La couche d'aspect 32 forme la face externe 26 de la première couche de revêtement 4 et s'étend sur la couche d'envers 34 qui forme la face interne 24 de la première couche de revêtement 4 et est appliquée sur la première partie 6 du support 4. La couche d'aspect 32 est par exemple formée par une peau en matériau naturel ou synthétique ou par un matériau textile, en fonction de l'aspect que l'on souhaite conférer à l'élément de garnissage 1 sur la première partie 6 du support 4. La couche d'envers 34 est par exemple formée par une couche de mousse agencée pour conférer un toucher souple à l'élément de garnissage 1 en regard de la première partie 6 du support 4. Selon ce mode de réalisation, le bord 28 de la première couche de revêtement 4 peut être comprimé, notamment la couche de mousse, de sorte que l'épaisseur du bord 28 peut être réduite par rapport à l'épaisseur du reste de la première couche de revêtement 4, comme représenté sur les figures. Il est entendu que la première couche de revêtement 4 peut comprendre plus de deux couches ou n'être formée que d'une seule couche, en fonction des caractéristiques souhaitées pour l'aspect et/ou le toucher de la première couche de revêtement 4. L'épaisseur de la première couche de revêtement 4 peut être constante ou non, mais l'épaisseur du bord 28 est inférieure à la largeur de la gorge 12, de sorte que le bord 28 peut être introduit dans la gorge 12 sans difficulté particulière.

Selon le mode de réalisation représenté sur les figures, l'élément de garnissage 1 comprend en outre une deuxième couche de revêtement 36 s'étendant sur la deuxième partie 14 du support 2. Plus particulièrement, la deuxième couche de revêtement 36 comprend une face interne 38, s'étendant sur la surface externe 10 de la deuxième partie du support 14, et une face externe 40 opposée à la face interne 38 et formant une autre partie visible de l'élément de garnissage 1 depuis l'habitacle du véhicule dans lequel l'élément de garnissage 1 est installé. La deuxième couche de revêtement 36 comprend un bord 42 formant au moins une partie de la périphérie de la deuxième couche de revêtement 36 au voisinage de la première partie 6. Lorsque la deuxième couche de revêtement 36 est fixée sur la deuxième partie 14 du support 2, le bord 42 s'étend dans la gorge 12. L'épaisseur de la deuxième couche de revêtement 36, définie comme la distance entre la face interne 38 et la face externe 40 de la deuxième couche de revêtement 36, est telle que la somme de l'épaisseur de la première couche de revêtement 4 et de l'épaisseur de la deuxième couche de revêtement, au niveau des bords 28 et 42, est inférieure à la largeur de la gorge 12 comme on peut le constater sur les figures. Plus particulièrement, l'épaisseur de la deuxième couche de revêtement 36 est par exemple inférieure à l'épaisseur de la première couche de revêtement 4 et est par exemple comprise entre 0,2 mm et 1 mm.

La deuxième couche de revêtement 36 est, selon un mode de réalisation, d'une nature différente de celle de la première couche de revêtement 4. Par « nature différente », on entend que la première couche de revêtement 4 est réalisée en un ou plusieurs matériaux différents de celui ou ceux de la deuxième couche de revêtement 36. La deuxième couche de revêtement 36 présente par exemple un aspect et/ou un toucher différents de ceux de la première couche de revêtement 4. La deuxième couche de revêtement 36 comprend par exemple une couche de matériau ligneux afin que l'élément de garnissage 1 présente un aspect « bois » en regard de la deuxième partie 14 du support 2. En variante, la deuxième couche de revêtement 36 peut être formée par un film synthétique décoratif ou autre.

En variante, la deuxième partie 14 du support 2 peut être laissée « nue », c'est-à-dire dépourvue de couche de revêtement sur sa face externe 10, de sorte que la face externe 10 de la deuxième partie 14 du support 2 forme une partie visible de l'élément de garnissage 1 depuis l'habitacle du véhicule dans lequel est installé l'élément de garnissage 1.

La fixation de la première couche de revêtement 4 et, le cas échéant, de la deuxième couche de revêtement 36 va à présent être décrite selon différents modes de réalisation du dispositif de maintien 30 selon l'invention.

Le dispositif de maintien 30 comprend, de façon générale, un élément d'appui 44 s'étendant au moins en partie dans la gorge 12 et agencé pour placer le premier élément de revêtement 4 en travers de la gorge 12 afin que celui-ci masque la plus grande partie de la gorge 12 lorsque le bord 28 du premier élément de revêtement 4 est reçu dans la gorge 12.

Plus particulièrement, lorsque le bord 28 de la première couche de revêtement 4 est reçu dans la gorge 12, la première couche de revêtement 4 recouvre la transition entre la face externe 10 de la première partie 6 du support 4 et la première paroi 16 de la gorge 12. La face interne 24 de la première couche de revêtement 4 s'étend en regard de la première paroi 16 de la gorge 12 et la face externe 26 de la première couche de revêtement 4 s'étend en regard de la deuxième paroi 18 de la gorge 12. L'élément d'appui 44 est alors agencé pour appliquer une partie de la face externe 26 du bord 28 de la première couche de revêtement 4 contre la deuxième paroi 18 de la gorge 12. L'application d'une la première couche de revêtement 4 se fait plus particulièrement au voisinage de l'ouverture 22 de la gorge 12. En d'autres termes, grâce à l'élément d'appui 44, la première couche de revêtement 4 s'étend en travers de la gorge 12, de la transition entre la surface externe 10 de la première partie 6 à la deuxième paroi 18 de la gorge 12 de sorte qu'elle recouvre la gorge 12 et masque celle-ci depuis l'extérieur de l'élément de garnissage. Par « appliquer contre », on entend un contact direct entre la face externe 26 du bord 28 de la première couche de revêtement et la deuxième paroi 18 de la gorge 12 ou un contact indirect si un élément est interposé entre la face externe 26 du bord 28 de la première couche de revêtement 4 et la deuxième paroi 18 de la gorge 12. Ainsi, il est entendu que, lorsque l'élément de garnissage 1 comprend une deuxième couche de revêtement 36, l'élément d'appui 44 applique la partie de la face externe 26 du bord 28 de la première couche de revêtement 4 contre la face externe 40 du bord 42 de la deuxième couche de revêtement 36, dont la face interne 38 est appliquée sur la deuxième paroi 18 de la gorge 16, comme représenté sur les figures.

L'élément d'appui 44 comprend une branche d'appui 46 s'étendant selon une direction allant de la première paroi 16 à la deuxième paroi 18, la branche d'appui 46 coopérant avec le bord 28 de la première couche de revêtement 4 de sorte à appliquer celle-ci contre la deuxième paroi 18 de la gorge 12. La branche d'appui 46 présente par exemple une largeur, mesurée selon la direction allant de la première paroi 16 à la deuxième paroi 18, sensiblement comprise entre 2 mm et 8 mm et une épaisseur par exemple sensiblement égale à 1 mm.

L'élément d'appui 44 comprend par exemple en outre une branche d'ancrage 48 s'étendant sensiblement parallèlement aux première et deuxième parois 16, 18 de la gorge 12, la branche d'ancrage 48 étant agencée pour maintenir le bord 28 de la première couche de revêtement 4 dans la gorge 12. La branche d'ancrage 48 présente par exemple une hauteur, mesurée selon sa direction d'extension sensiblement parallèle aux première et deuxième parois 16, 18 de la gorge 12, sensiblement comprise entre 5 mm et 10 mm. La branche d'appui 46 s'étend en saillie d'une extrémité de la branche d'ancrage 48 selon la direction allant de la première paroi 16 vers la deuxième paroi 18 au voisinage de l'ouverture 22 de la gorge 12. La face interne 24 de la première couche de revêtement 4 passe autour de la branche d'appui 46 en amont de l'extrémité du bord 28 qui s'étend dans la gorge 12 de sorte qu'une partie de la première couche de revêtement 4 est déformée vers la deuxième paroi 18 de la gorge et se place en appui contre elle lorsque le bord 28 est introduit dans la gorge 12. La partie de la première couche de revêtement 4 qui s'étend entre la partie en appui contre la deuxième paroi 18 et entre l'extrémité du bord 28 coopère avec la branche d'ancrage 48 pour maintenir le bord 28 dans la gorge 12, comme cela va à présent être décrit. L'élément d'appui 44 est par exemple réalisé en un matériau élastomère thermoplastique.

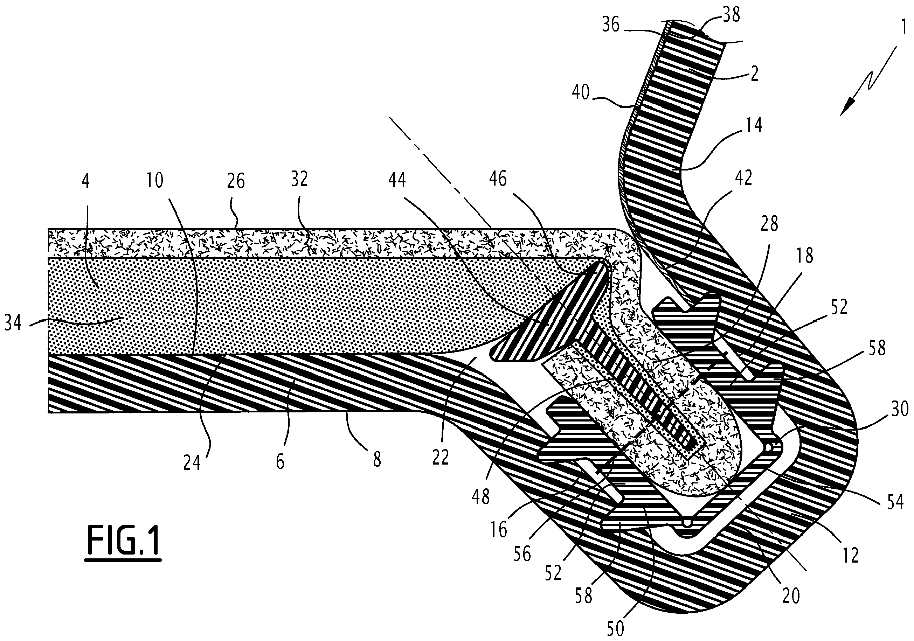

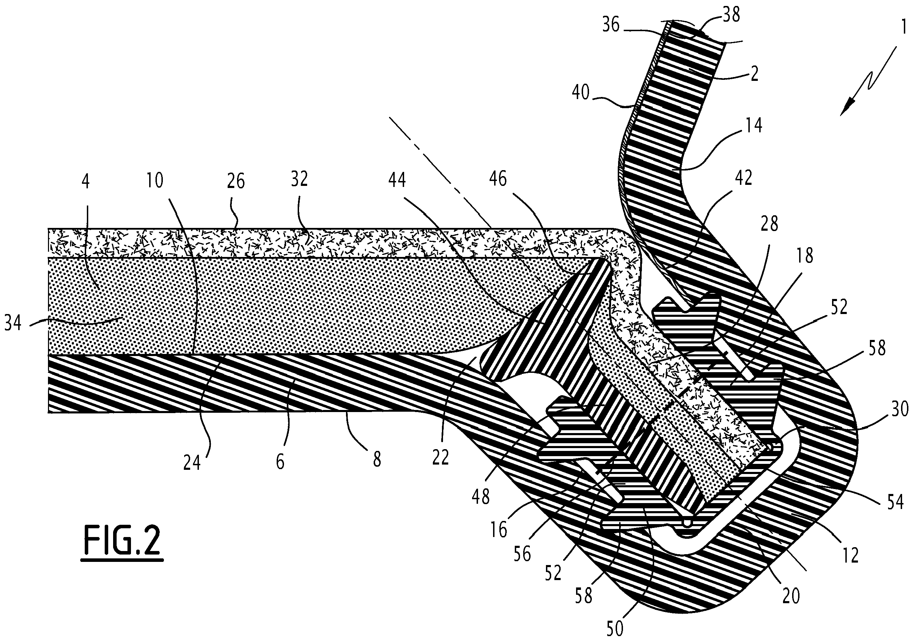

Selon les modes de réalisation des Figs. 1 et 2, le dispositif de maintien 30 comprend en outre un profilé de maintien 50 distinct de l'élément d'appui 44. Le profilé de maintien 50 est agencé pour recevoir le bord 28 de la première couche de revêtement 4 et pour coopérer avec la gorge 12 afin de maintenir le bord 28 dans la gorge 12, le bord 28 étant retenu dans le profilé de maintien par la branche d'ancrage 48 de l'élément de maintien 44.

Le profilé de maintien 50 présente une forme sensiblement complémentaire de celle de la gorge 12. Ainsi, le profilé de maintien 50 présente une section en forme de U et définit un logement délimité par deux parois latérales 52 et une paroi de fond 54. Les parois latérales 52 forment les branches du U et la paroi de fond 54 forme la base du U. Le profilé de maintien 50 est par exemple réalisé en un matériau élastomère thermoplastique.

Le bord 28 de la première couche de revêtement 4 est reçu dans le logement formé par le profilé de maintien 50 et est maintenu dans celui-ci par la branche d'ancrage 48 de l'élément d'appui 44.

Ainsi, selon le mode de réalisation de la Fig. 1, le bord 28 de la première couche de revêtement 4 est replié autour de la branche d'ancrage 48 et est introduit avec la branche d'ancrage 48 dans le logement formé par le profilé de maintien 50. Le bord 28 est maintenu dans le logement par la force exercée par la branche d'ancrage 48 sur le bord 28 qui applique la face externe 26 du bord 28 contre les parois latérales 52 du profilé de maintien 50, notamment grâce à la compression de la couche d'envers 34 de la première couche de revêtement 4. Ce maintien peut être assuré en outre par une couture 56 entre le bord 28, l'élément d'appui 44 et le profilé de maintien 50.

Le mode de réalisation de la Fig. 2 est similaire à celui de la Fig. 1 en dehors du fait que le bord 28 n'est pas replié autour de la branche d'ancrage 48. Selon ce mode de réalisation, l'épaisseur de la branche d'ancrage 48 peut être augmentée pour remplir le logement du profilé de maintien 50 en coopération avec le bord 28 de la première couche de revêtement 4. Dans ce mode de réalisation également, la branche d'ancrage 48 peut comprimer la couche d'envers 34 de la première couche de revêtement 4 afin de maintenir en force le bord 28 dans le logement du profilé de maintien 50. Ce maintien peut être assuré en outre par une couture 56 entre le bord 28, l'élément d'appui 44 et le profilé de maintien 50.

La coopération entre le profilé de maintien 50 et la gorge 12 se fait par exemple en introduisant en force le profilé de maintien 50, dans lequel le bord 28 de la première couche de revêtement 4 est maintenu, et en appliquant les parois latérales 52 du profilé contre les première et deuxième parois 16 et 18 de la gorge 12. Selon un mode de réalisation, au moins une nervure 58 s'étend en saillie de l'une des parois latérales 52 du profilé de maintien 50 à l'extérieur du logement défini par ce profilé, entre cette paroi latérale 52 et la paroi de la gorge 12 correspondante, cette nervure 58 ancrant le profilé de maintien 50 dans la gorge 12. Avantageusement, comme représenté sur les figures, des nervures 58 sont prévues sur les deux parois latérales 52 du profilé 50 et coopèrent avec les première et deuxième parois 16 et 18 de la gorge 12 afin d'assurer la fixation du profilé de maintien 50 dans la gorge 12. La largeur du profilé 50 avant son insertion dans la gorge 12 est par exemple supérieure à la largeur de la gorge 12 de sorte que le profilé 50 est maintenu en force dans la gorge 12.

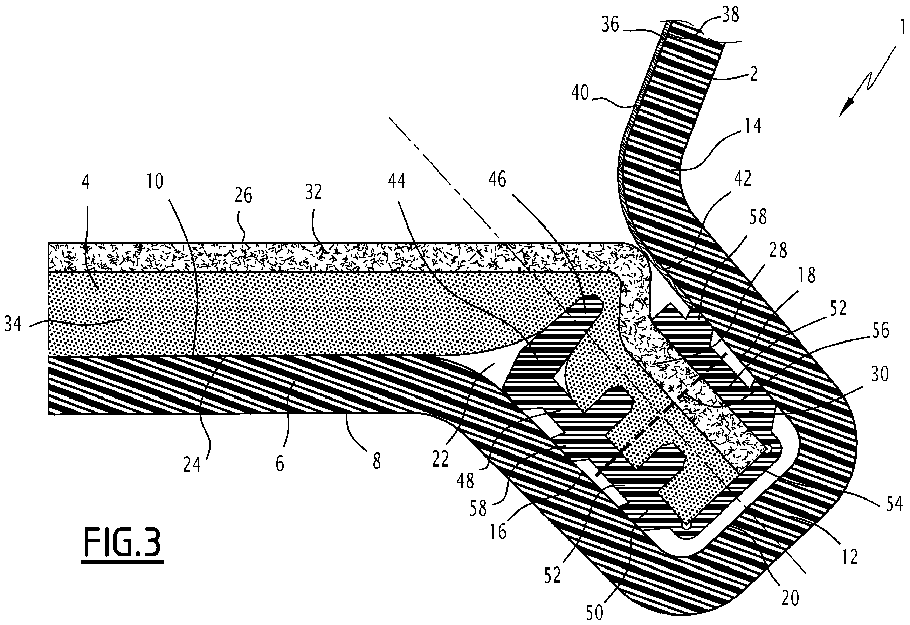

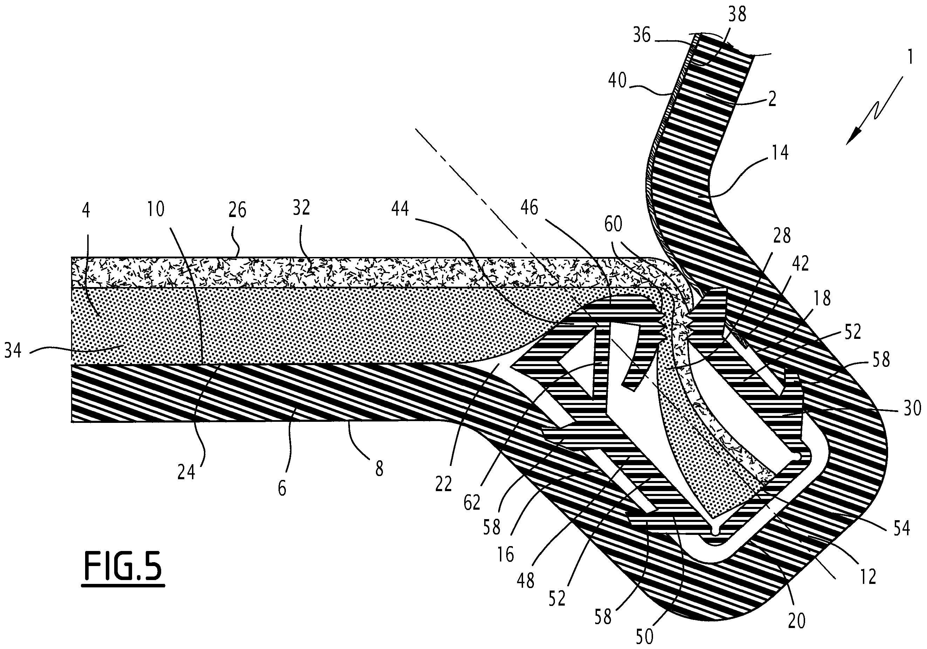

Les modes de réalisation des Figs. 3 à 5 sont similaires aux modes de réalisation des Figs. 1 et 2 en dehors du fait que l'élément d'appui 44 est réalisé d'une seule pièce avec le profilé de maintien 50. Ainsi, selon ces modes de réalisation, la branche d'ancrage 48 de l'élément d'appui 44 forme également l'une des parois latérales 52 du profilé de maintien 50, à savoir la paroi latérale 52 qui est appliquée contre la première paroi 16 de la gorge 12. La branche d'appui 46 s'étend ainsi en saillie de l'extrémité de la paroi latérale 52 formant la branche d'ancrage 48 vers la deuxième paroi 18 de la gorge 12 pour appliquer la partie de la première couche de revêtement 4 passant autour de la branche d'appui 46 contre la deuxième paroi 18 de la gorge 12, comme représenté sur les Figs. 3 et 5.

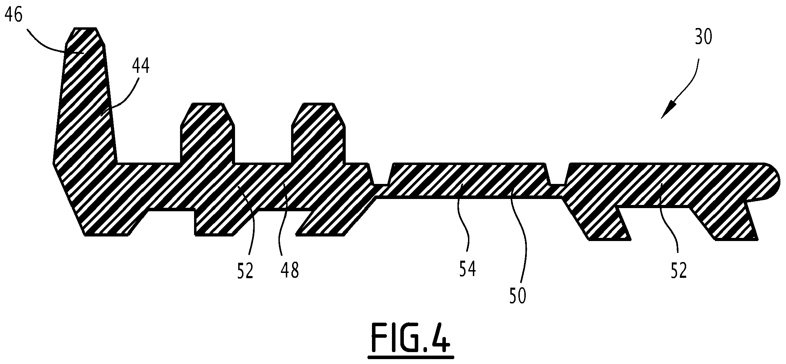

Selon le mode de réalisation des Figs. 3 et 4, le dispositif de maintien 30 réalisé d'une seule pièce est formé par un clips replié autour du bord 28 de la première couche de revêtement 4. Ainsi, le dispositif de maintien 30 est réalisé dans un état déplié, représenté sur la Fig. 4, dans lequel les parois latérales 52 s'étendent dans la continuité de la paroi de fond 54, puis est replié autour du bord 28 de la première couche de revêtement 4 en pliant les parois latérales 52 autour de la paroi de fond 54. Un tel clips peut être réalisé de façon simple et est démoulable facilement. Le maintien du bord 28 dans le logement formé par le profilé de maintien 50 peut être finalisé par une couture 56 entre le bord 28 et le profilé de maintien 50.

Selon le mode de réalisation de la Fig. 5, le profilé de maintien 50 est préalablement disposé dans la gorge 12 et le bord 28 de la première couche de revêtement 4 est introduit dans le logement formé par le profilé 50 après le positionnement du profilé de maintien 50 dans la gorge 12. Dans ce cas, la branche d'appui 46 définit avec la paroi latérale 52 appliquée contre la deuxième paroi 18 de la gorge 12 un passage dans lequel est introduit le bord 28 de la première couche de revêtement 4. Des dents 60 s'étendant en saillie dans le passage à partir de la branche d'appui 46 et de la paroi latérale 52 permettent de retenir le bord 28 dans le logement formé par le profilé de maintien 50. Dans ce cas, il n'est pas nécessaire de prévoir une couture supplémentaire, ce qui simplifie le montage de l'élément de garnissage. Une nervure de renfort 62 peut en outre être prévue entre la branche d'appui 46 et la paroi latérale 52 formant la branche d'ancrage 48 pour assurer un support rigide à la partie de la première couche de revêtement 4 qui s'étend sur l'ouverture 22 de la gorge 12, comme représenté sur la Fig. 5.

Le dispositif de maintien 30 permet ainsi de disposer la première couche de revêtement 4 en travers de la gorge 12 de sorte qu'elle recouvre l'ouverture 22 de la gorge 12 de la première paroi 16 à la deuxième paroi 18. La transition entre la surface externe 26 de la première couche de revêtement 4 et la surface externe 40 de la deuxième couche de revêtement 36 ou la surface externe 10 de la deuxième partie 14 du support 2 présente ainsi un aspect amélioré. Ceci est notamment dû au fait que le rayon de courbure de la première couche de revêtement 4 au niveau de la partie qui est appliquée contre la deuxième paroi 18 de la gorge 12 peut être réduit, grâce à l'élément d'appui 44. Ainsi, le rayon de courbure de la surface externe 26 de la première couche de revêtement 4 au niveau de la partie appliquée contre la deuxième paroi 18 est par exemple sensiblement compris entre 1 mm et 4 mm. Un tel rayon de courbure réduit permet de réduire la profondeur de la transition entre la première couche de revêtement 4 et la deuxième couche de revêtement 36 ou la deuxième partie 14 du support 2, ce qui en améliore l'aspect. En outre, la gorge 12 n'est pas visible depuis l'extérieur de l'élément de garnissage 1.

Il est entendu que le support 2 peut comprendre plus d'une gorge 12, par exemple deux gorges 12 pour recevoir deux bords 28 opposés de la première couche de revêtement 4, et plus de deux couches de revêtement.

## Revendications

1. Elément de garnissage (1) de véhicule comprenant :
- un support (2) comprenant au moins une gorge (12) s'étendant en creux à partir d'une surface externe (10) du support (2), ladite gorge (12) étant délimitée par une première paroi (16) et une deuxième paroi (18) espacées l'une de l'autre,
- au moins une première couche de revêtement (4) comprenant une face interne (24) s'étendant sur une première partie (6) dudit support (2) et une face externe (26), opposée à la face interne (24), ladite première couche de revêtement (4) comprenant au moins un bord (28) définissant une partie de la périphérie de la première couche de revêtement (4), ledit bord (28) étant reçu dans la gorge (12) du support (2), la face interne (24) du bord (28) de la première couche de revêtement (4) s'étendant en regard de la première paroi (16) de la gorge (12) et la face externe (26) du bord (28) de la première couche de revêtement (4) s'étendant en regard de la deuxième paroi (18) de la gorge (12),
l'élément de garnissage étant **caractérisé en ce qu'**il comprend en outre un dispositif de maintien (30) du bord (28) de la première couche de revêtement (4) dans la gorge (12) du support (2), ledit dispositif de maintien (30) comprenant au moins un élément d'appui (44) s'étendant au moins en partie dans la gorge (12) et appliquant une partie de la face externe (26) du bord (28) de la première couche de revêtement (4) contre la deuxième paroi (18) de la gorge (12), la première couche de revêtement (4) recouvrant la gorge (12) de la première paroi (16) à la deuxième paroi (18).

2. Elément de garnissage selon la revendication 1, dans lequel la première partie (6) du support (2) est adjacente à la première paroi (16) de la gorge (12), le support comprenant une deuxième partie (14) adjacente à la deuxième paroi (18) de la gorge (12).

3. Elément de garnissage selon la revendication 2, comprenant une deuxième couche de revêtement (36), de nature différente de celle de la première couche de revêtement (4), une face interne (38) de ladite deuxième couche de revêtement (36) s'étendant sur la deuxième partie (14) du support (2), la deuxième couche de revêtement (36) comprenant un bord (42) définissant une partie de la périphérie de la deuxième couche de revêtement (36), ledit bord (42) étant reçu dans la gorge (12), la face interne (38) du bord (42) de la deuxième couche de revêtement (36) s'étendant sur de la deuxième paroi (18) de la gorge (12), l'élément d'appui (44) du dispositif de maintien (30) appliquant une partie de la face externe (26) du bord (28) de la première couche de revêtement (4) contre une face externe (40) du bord (42) de la deuxième couche de revêtement (36), opposée à la face interne (38) de la deuxième couche de revêtement (36).

4. Elément de garnissage selon la revendication 3, dans lequel la somme des épaisseurs des bords (28, 42) de la première couche de revêtement (4) et de de la deuxième couche de revêtement (36) est inférieure à la largeur de la gorge (12).

5. Elément de garnissage selon l'une quelconque des revendications 1 à 4, dans lequel l'élément d'appui (44) comprend une branche d'ancrage (48) s'étendant sensiblement parallèlement aux première et deuxième parois (16, 18) de la gorge (12) et étant agencée pour maintenir le bord (28) de la première couche de revêtement (4) dans ladite gorge (12), l'élément de maintien (44) comprenant une branche d'appui (46) s'étendant en saillie d'une extrémité de ladite branche d'ancrage (48) selon une direction allant de la première paroi (16) à la deuxième paroi (18) de la gorge (12), la première couche de revêtement 4 étant pliée autour de ladite branche d'appui (46).

6. Elément de garnissage selon la revendication 5, dans lequel le bord (28) de la première couche de revêtement (4) est replié autour de la branche d'ancrage (48) de l'élément de maintien (44).

7. Elément de garnissage selon la revendication 5 ou 6, dans lequel le dispositif de maintien (30) comprend en outre un profilé de maintien (50) du bord (28) de la première couche de revêtement (4) dans la gorge (12), ledit profilé de maintien (50) définissant un logement délimité par deux parois latérales (52) appliquées respectivement contre la première paroi (16) et la deuxième paroi (18) de la gorge (12), le bord (28) de la première couche de revêtement (4) étant maintenu dans ledit logement.

8. Elément de garnissage selon la revendication 7, dans lequel la branche d'ancrage (48) est reçue dans ledit logement et bloque le bord (28) de la première couche de revêtement (4) dans ledit logement.

9. Elément de garnissage selon la revendication 7, dans lequel la paroi latérale (52) du profilé de maintien (50) appliquée contre la première paroi (16) de la gorge (12) est formée par la branche d'ancrage (48) de l'élément de maintien (44), le profilé de maintien (50) et l'élément de maintien (44) étant venus de matière.

10. Elément de garnissage selon l'une quelconque des revendications 7 à 9, dans lequel au moins une paroi latérale (52) du profilé de maintien (50) comprend au moins une nervure (58) s'étendant en saillie de ladite paroi latérale (52) à l'extérieur du logement entre ladite paroi latérale (52) et la paroi (16, 18) correspondante de la gorge (12), ladite nervure (58) ancrant le profilé de maintien (50) dans la gorge (12).
